**Europäisches Patentamt**

**European Patent Office**

**Office européen des brevets**

(19)

(11) Numéro de publication : **0 053 146 B1**

# (12) FASCICULE DE BREVET EUROPÉEN

(45) Date de publication du fascicule du brevet :
05.09.84

(51) Int. Cl.³ : **H 01 H 35/10, H 02 K 11/00, E 05 F 15/10**

(21) Numéro de dépôt : **81901521.5**

(22) Date de dépôt : **10.06.81**

(86) Numéro de dépôt international :
**PCT/FR 81/00072**

(87) Numéro de publication internationale :
**WO/8103715 (24.12.81 Gazette 81/30)**

(54) **DISPOSITIF POUR COUPER AUTOMATIQUEMENT L'ALIMENTATION ELECTRIQUE D'UN MOTEUR ET SON UTILISATION.**

(30) Priorité : **11.06.80 FR 8012935**

(43) Date de publication de la demande :
**09.06.82 Bulletin 82/23**

(45) Mention de la délivrance du brevet :
**05.09.84 Bulletin 84/36**

(84) Etats contractants désignés :
**AT CH DE GB LI LU NL SE**

(56) Documents cités :
**CH-A- 264 434
FR-A- 889 629
FR-A- 1 381 060
GB-A- 682 361
GB-A- 1 493 631**

(73) Titulaire : **FAIVELEY S.A. Société Anonyme française**
**93 rue du Docteur Bauer**
**F-93404 Saint-Ouen (FR)**

(72) Inventeur : **GEORGELIN, Alexandre**
**130 rue Henri-Litolff**
**F-92270 Bois Colombes (FR)**

(74) Mandataire : **Bouju, André**
**38 Avenue de la Grande Armée**
**F-75017 Paris (FR)**

## Description

La présente invention concerne un dispositif pour couper automatiquement l'alimentation électrique d'un moteur.

L'invention vise également l'utilisation d'un tel dispositif pour couper automatiquement l'alimentation d'un moteur de commande de l'ouverture et de la fermeture d'une porte, notamment d'une porte de garage, lorsque cette dernière est en fin de course d'ouverture ou de fermeture.

Dans le cas où l'ouverture d'une porte, par exemple de garage est commandée par un moteur électrique, la mise en route et l'arrêt du moteur sont le plus souvent commandés par un simple interrupteur. En fin de course de la porte, ce moteur électrique est bloqué en rotation. Pour éviter la détérioration du moteur, l'alimentation électrique de ce dernier doit être coupée dès que le moteur est bloqué en rotation. A cet effet, on a proposé de nombreux systèmes de sécurité qui ont pour effet de supprimer toute intervention manuelle de l'utilisateur, pour couper l'alimentation électrique du moteur, aux fins de course de l'objet qui est entraîné par le moteur.

Ces dispositifs comprennent des interrupteurs de fin de course à commande mécanique ou électro-mécanique. Ces dispositifs présentent l'inconvénient d'être compliqués et onéreux. De ce fait, ces dispositifs sont réservés à des portes de très grandes dimensions, lourdes et coûteuses.

On connaît d'autre part, selon les documents FR-A-889629 et GB-A-1493631 des dispositifs de ce genre comprenant des masses rendues solidaires en rotation du moteur et déplaçables sous l'effet de la force centrifuge engendrée lors de cette rotation pour mettre en circuit l'alimentation électrique du moteur, ce dispositif comprenant un corps de révolution fixé sur l'une des extrémités de l'arbre du moteur et comportant des logements pour lesdites masses, un disque reposant contre la face du corps dans laquelle sont ménagées les entrées des logements desdites masses et masquant lesdites entrées et un couvercle recouvrant ledit disque.

L'inconvénient que présentent ces dispositifs se traduit par une déficience de sensibilité due souvent à des défauts de guidage de l'organe assurant le contact électrique et provoquant des frottements nuisibles et des pertes d'énergie.

Le but de la présente invention est de remédier à l'inconvénient précité, en créant un dispositif pour couper automatiquement l'alimentation électrique d'un moteur, qui soit de réalisation simple et peu coûteuse, tout en étant extrêmement sensible.

Suivant l'invention, ce dispositif est caractérisé en ce que le disque est libre par rapport au corps de révolution et au couvercle et comporte sur la face opposée au corps de révolution une protubérance centrale sur le sommet duquel est en appui élastique une lame conductrice d'un interrupteur, ladite protubérance centrale du disque pouvant se loger dans une ouverture complémentaire ménagée dans le fond du couvercle, ladite lame conductrice maintenant en circuit l'alimentation électrique du moteur tant qu'elle est sollicitée par la poussée exercée sur le disque par la force centrifuge appliquée sur les masses et cette lame coupant l'alimentation électrique du moteur lorsque cette force centrifuge chute et que le moteur est bloqué sous l'effet d'une résistance mécanique.

Grâce au dispositif conforme à l'invention, l'intervention de l'utilisateur se limite à l'actionnement d'un organe tel qu'un bouton poussoir pour commander la mise en route du moteur. Ce bouton poussoir peut être relâché par l'utilisateur dès que l'alimentation électrique est assurée par la fermeture du contact électrique qui est commandée automatiquement par la masse déplaçable sous l'effet de la force centrifuge.

Lorsqu'une résistance mécanique s'applique contre le couple exercé par le moteur, par exemple à la fin de course d'ouverture ou de fermeture d'une porte, la force centrifuge chute, ce qui commande automatiquement l'ouverture du contact électrique et la mise hors circuit de l'alimentation électrique du moteur.

Le dispositif conforme à l'invention remplace ainsi avantageusement tous les interrupteurs de fin de course, compliqués et onéreux, utilisés dans l'art antérieur.

De plus, étant donné que le disque est libre par rapport au corps et à l'arbre du moteur, ce disque peut se déplacer, sous l'effet des masses déplacées par la force centrifuge, vers le couvercle, sans frottement et sans risque de grippage, ce qui garantit au dispositif conforme à l'invention une excellente sensibilité et fiabilité de fonctionnement.

Par ailleurs, en fin de déplacement, la protubérance centrale du disque se loge dans l'ouverture du couvercle, ce qui assure un parfait centrage du disque et par suite l'équilibre des pièces en mouvement.

En outre, le dispositif conforme à l'invention présente une faible inertie du fait que le disque mobile est libre par rapport au corps.

Selon une réalisation préférée de l'invention, dans le dispositif conforme à l'invention la protubérance et l'ouverture sont tronconiques, ce qui permet d'obtenir un excellent guidage du déplacement du disque vers le couvercle sans engendrer de frottement.

De préférence, le corps de révolution comporte des évidements cylindriques et borgnes régulièrement répartis autour de l'axe du corps, ces évidements borgnes recevant chacun une bille métallique, l'ensemble de ces billes constituant lesdites masses déplaçables, l'axe des évidements étant incliné par rapport à l'axe du corps de façon à ce que le fond des évidements soit plus proche de l'axe du corps que l'entrée de ces évidements.

Lors de la mise en rotation du moteur, les billes se déplacent dans les évidements inclinés en s'éloignant de l'axe du corps de révolution et en prenant appui contre l'organe qui est situé en regard des entrées de ces évidements. Cet organe est ainsi déplacé par les billes, ce qui provoque la fermeture du contact électrique comportant la lame conductrice flexible.

Inversement, lorsque le moteur rencontre une résistance mécanique, les billes reviennent vers la position initiale, ce qui assure le déplacement de l'organe précité vers sa position inactive, en appui contre le corps cylindrique. On obtient ainsi la mise hors circuit du moteur.

D'autres particularités et avantages de l'invention apparaîtront encore dans la description ci-après.

Aux dessins annexés, donnés à titre d'exemples non limitatifs :

la figure 1 est une vue en coupe longitudinale partielle d'un dispositif conforme à l'invention, monté sur l'arbre d'un moteur électrique,

la figure 2 est une vue analogue à la figure 1, le dispositif étant en position de fonctionnement,

la figure 3 est une vue du dessus du dispositif selon la figure 1,

la figure 4 est une vue en coupe suivant le plan IV-IV de la figure 1,

la figure 5 est un schéma du circuit d'alimentation électrique du moteur comportant le dispositif conforme à l'invention.

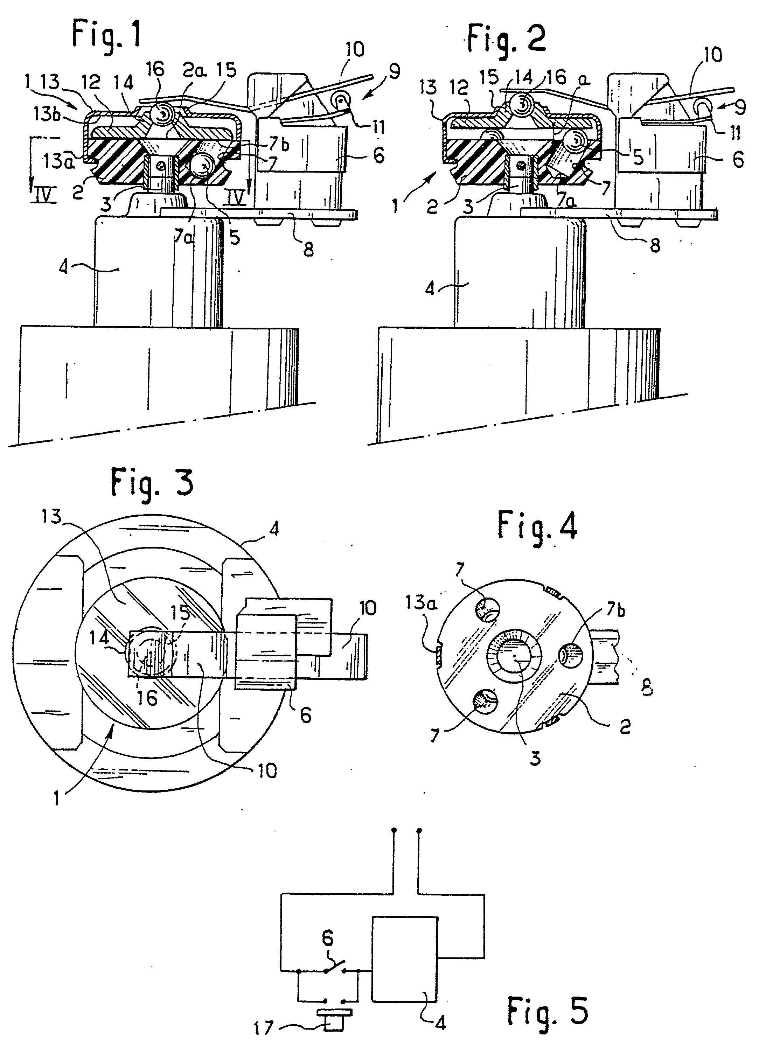

Dans la réalisation des figures 1 à 4, le dispositif conforme à l'invention 1 comprend principalement un corps de révolution 2 en matière plastique, fixé sur l'extrémité de l'arbre 3 du moteur 4, ce corps 2 renfermant des billes 5, et un interrupteur 6 étant prévu pour mettre en circuit ou hors circuit l'alimentation électrique du moteur 4.

Le corps de révolution 2 comporte trois évidements cylindriques et borgnes 7 (voir figure 4) régulièrement répartis autour de l'axe du corps 2. Ces évidements 7 reçoivent chacun une bille 5. L'axe de ces évidements 7 est incliné par rapport à l'axe du corps 2, de façon que le fond 7a de ces évidements 7 soit plus proche de l'axe du corps 2 que l'entrée 7b de ces évidements.

L'alésage de ces évidements cylindriques 7 est légèrement supérieur au diamètre des billes 5, de façon que celles-ci puissent se déplacer librement dans ces évidements 7.

L'interrupteur 6 est fixé par une lame métallique 8 à la carcasse extérieure du moteur 4 près de l'extrémité de son arbre 3. Cet interrupteur 6 comporte un contact électrique 9 composé de deux lames conductrices et flexibles 10, 11, susceptibles de venir en contact l'une avec l'autre, comme indiqué sur la figure 2 pour mettre en circuit l'alimentation électrique du moteur 4.

La lame conductrice 10 est en appui élastique contre un disque 12 centré sur l'axe du corps 2 qui repose en position inactive (voir figure 1) contre la face plane 2a du corps 2 où se situent les entrées 7b des évidements cylindriques 7.

Ce disque 12 libre par rapport au corps 2 est recouvert par un couvercle 13 dont le bord extérieur 13a est fixé, par exemple par sertissage, à la périphérie du corps 2.

Le fond 13b de ce couvercle 13 limite le déplacement du disque 12 dans l'axe du corps, suivant une distance a sensiblement égale au rayon des billes 5 (voir figure 2) pour éviter que ces dernières sortent complètement de leurs évidements respectifs 7.

D'autre part, le disque 12 comporte sur sa face opposée au corps de révolution, une protubérance centrale tronconique 14 pouvant se loger, (voir figure 2) dans une ouverture tronconique complémentaire 15 ménagée dans le fond 13b du couvercle 13. Cette protubérance tronconique 14 et cette ouverture complémentaire 15 servent ainsi à guider sans frottement le déplacement axial du disque 12. Dans l'exemple représenté, le contact entre la lame conductrice flexible 10 et le disque 12 est réalisé au moyen d'une bille 16 située au sommet de la protubérance tronconique 14 du disque 12.

A titre d'exemple, le moteur 4 peut avoir une puissance de quelques centaines de watt une vitesse de rotation de l'ordre de 3 000 tours/minute, le corps cylindrique 2 présentant dans ce cas un diamètre égal à 4 cm, et les billes 5 contenues dans ce dernier un diamètre de 6 mm et un poids égal à 6,5 g.

Le dispositif que l'on vient de décrire est utilisé de préférence pour couper automatiquement l'alimentation électrique d'un moteur de commande de l'ouverture et de la fermeture d'une porte de garage, lorsque cette dernière est en fin de course d'ouverture ou de fermeture.

Dans une telle utilisation, le circuit d'alimentation électrique du moteur 4 comprend (voir figure 5) un bouton poussoir 17 branché en parallèle avec l'interrupteur 6 du dispositif conforme à l'invention.

Dans le cadre de l'utilisation précitée, le fonctionnement du dispositif conforme à l'invention est le suivant :

En position inactive, les billes 5 sont situées au fond 7a des évidements cylindriques 7 du corps de révolution 2 en matière plastique.

Pour commander la mise en route du moteur électrique 4, c'est-à-dire l'ouverture ou la fermeture d'une porte, l'utilisateur appuie sur le bouton poussoir 17. Le moteur 4 atteint rapidement son régime de rotation normal. Sous l'effet de la force centrifuge, les billes 5 se déplacent dans les évidements respectifs 7 et font saillie par rapport aux entrées 7b de ces derniers, ce qui a pour effet de déplacer le disque 12 vers la position représentée sur la figure 2. Ce déplacement entraîne le basculement de la lame conductrice 10 en appui sur la bille 16, et par suite la fermeture du contact électrique 9. En fin de déplacement, le disque 12 prend appui contre le fond 13b du couvercle 13, sa partie centrale tronconique 14 étant emboîtée dans l'ouverture complémentaire 15 ménagée au centre de ce couvercle 13.

Le moteur électrique 4 est ainsi auto-alimenté en courant électrique. L'utilisateur peut alors relâcher le bouton poussoir 17.

L'ouverture ou la fermeture de la porte se poursuit ainsi, sans aucune intervention complémentaire de l'utilisateur. En fin de course, la porte arrive en butée. Le moteur électrique 4 rencontre ainsi une résistance mécanique qui bloque sa rotation. La force centrifuge qui s'exerce sur les billes 5 chute brutalement ce qui provoque le retour des billes 5 vers leur position inactive au fond des évidements 7. Le disque 12 reprend alors la position de la figure 1, en ouvrant le contact électrique 9. L'alimentation électrique du moteur 4 est ainsi coupée de façon automatique sans aucune intervention manuelle de l'utilisateur.

De la description qui précède, on remarque que la réalisation du dispositif conforme à l'invention est particulièrement simple. Il peut en particulier s'adapter à tous les types de moteurs électriques. Il suffit à cet effet d'adapter la masse des billes 5 à la vitesse de rotation du moteur, celle-ci devant être suffisante pour assurer le déplacement des billes par effet centrifuge.

L'encombrement du dispositif est très faible et peut être fixé directement sur l'arbre de sortie d'un moteur électrique sans qu'il soit nécessaire de prolonger cet arbre, étant donné que seul le corps 2 du dispositif est engagé sur cet arbre et que le disque 12 et le couvercle 13 sont libres par rapport à celui-ci.

Par ailleurs, l'expérience a montré que le dispositif conforme à l'invention était particulièrement sensible et fiable et ne nécessitait aucun entretien.

Son utilisation est particulièrement commode, car l'utilisateur n'a nullement à se préoccuper des fins de courses.

La réalisation particulièrement économique du dispositif conforme à l'invention, le rend à la portée du particulier désireux d'installer à sa porte de garage une commande automatique d'ouverture et de fermeture.

Bien entendu, l'invention n'est pas limitée aux exemples que l'on vient de décrire et on peut apporter à ceux-ci de nombreuses modifications sans sortir du cadre de l'invention.

Ainsi, les billes 7 peuvent être remplacées par toute autre masse déplaçable sous l'effet de la force centrifuge.

Le dispositif conforme à l'invention peut être utilisé dans toutes applications où l'on désire commander automatiquement, la coupure de l'alimentation électrique d'un moteur lorsque l'objet métallique qui est entraîné par ce moteur arrive en fin de course et où une résistance mécanique s'applique contre le couple exercé par le moteur.

Le circuit électrique comportant le bouton-poussoir 17 peut encore comporter un temporisateur réglé pour utiliser le moteur pendant une durée suffisante compatible avec la durée nécessaire pour obtenir la fermeture du contact électrique 6 associé au dispositif conforme à l'invention.

**Revendications**

1. Dispositif pour couper automatiquement l'alimentation électrique d'un moteur (4), comprenant des masses (5) rendues solidaires en rotation du moteur (4) et déplaçables sous l'effet de la force centrifuge engendrée lors de cette rotation pour mettre en circuit l'alimentation électrique du moteur, ce dispositif comprenant un corps de révolution (2) fixé sur l'une des extrémités de l'arbre (3) du moteur (4) et comportant des logements (7) pour lesdites masses (5), un disque (12) reposant contre la face (2a) du corps (2) dans laquelle sont ménagées les entrées (7b) des logements (7) desdites masses (5) et masquant lesdites entrées (7b) et un couvercle (13) recouvrant ledit disque (12), caractérisé en ce que ce disque (12) est libre par rapport au corps de révolution (2) et au couvercle (13) et comporte sur la face opposée au corps de révolution (2) une protubérance centrale (14) sur le sommet duquel est en appui élastique une lame conductrice (10) d'un interrupteur (6), ladite protubérance centrale (14) du disque (12) pouvant se loger dans une ouverture complémentaire (15) ménagée dans le fond (13b) du couvercle (13), ladite lame conductrice (10) maintenant en circuit l'alimentation électrique du moteur (4) tant qu'elle est sollicitée par la poussée exercée sur le disque (12) par la force centrifuge appliquée sur les masses (5) et cette lame (10) coupant l'alimentation électrique du moteur lorsque cette force centrifuge chute et que le moteur est bloqué sous l'effet d'une résistance mécanique.

2. Dispositif conforme à la revendication 1, caractérisé en ce que la protubérance (14) et l'ouverture (15) sont tronconiques.

3. Dispositif conforme à l'une quelconque des revendications 1 ou 2, caractérisé en ce que le corps de révolution (2) comporte des évidements cylindriques et borgnes (7) régulièrement répartis autour de l'axe du corps (2), ces évidements borgnes (7) recevant chacun une bille métallique (5), l'ensemble de ces billes (5) constituant ladite masse déplaçable, l'axe des évidements (7) étant incliné par rapport à l'axe du corps (2) de façon à ce que le fond (7a) des évidements (7) soit plus proche de l'axe du corps (2) que l'entrée (7b) de ces évidements.

4. Dispositif conforme à l'une quelconque des revendications 1 à 3, caractérisé en ce que le couvercle (13) recouvrant le disque (12) est fixé par son bord extérieur (13a) à la périphérie du corps (2).

5. Dispositif conforme à l'une quelconque des revendications 1 à 4, caractérisé en ce que le sommet de la protubérance centrale (14) est en contact avec la lame conductrice (10) par l'intermédiaire d'une bille (16).

6. Utilisation du dispositif conforme à l'une quelconque des revendications 1 à 5, pour couper automatiquement l'alimentation électrique d'un moteur de commande actionnant l'ouverture et la fermeture d'une porte lorsque cette dernière est en fin de course d'ouverture ou de fermeture.

## Claims

1. Device for automatically interrupting the supply of electric power to a motor (4), comprising masses (5) coupled for rotation with the motor (4) and displaceable under the action of the centrifugal force generated at the time of this rotation in order to put the electric power supply of the motor in circuit, this device being constituted by a body of revolution (2) fixed on one of the ends of the shaft (3) of the motor (4) and provided with recesses (7) for said masses (5), a disk (12) which rests against that face (2a) of the body (2) in which the entrances (7b) of the recesses (7) of said masses (5) are formed and masks said entrances (7b) and a cap (13) covering said disk (12), characterized in that this disk (12) is free with respect to the body of revolution (2) and with respect to the cap (13) and is provided on the face remote from the body of revolution (2) with a central protuberance (14) having an apex against which is resiliently applied a conductive strip (10) of a switch (6), said central protuberance (14) of the disk (12) being capable of fitting within a complementary opening (15) formed in the end-wall (13b) of the cap (13), the function of said conductive strip (10) being to maintain the electric supply of the motor (4) in circuit as long as it is subjected to the thrust exerted on the disk (12) by the centrifugal force applied to the masses (5) and this strip (10) cuts off the supply of electric power to the motor when this centrifugal force decreases and when the motor is locked under the action of a mechanical resistance.

2. Device in accordance with claim 1, characterized in that the protuberance (14) and the opening (15) are frusto-conical.

3. Device in accordance with either of claims 1 or 2, characterized in that the body of revolution (2) is provided with cylindrical blind-end recesses (7) in uniformly spaced relation about the axis of the body (2), these blind-end recesses (7) being each intended to receive a metallic ball (5), these balls (5) being all intended to constitute said displaceable mass, the axes of the recesses (7) being inclined with respect to the axis of the body (2) so as to ensure that the end-walls (7a) of the recesses (7) are closer to the axis of the body (2) than the entrances (7b) of these recesses.

4. Device in accordance with any one of claims 1 to 3, characterized in that the cap (13) which covers the disk (12) is attached by means of its external edge (13a) to the periphery of the body (2).

5. Device in accordance with any one of claims 1 to 4, characterized in that the apex of the central protuberance (14) is in contact with the conductive strip (10) through the intermediary of a ball (16).

6. Utilization of the device in accordance with any one of claims 1 to 5 for automatically interrupting the supply of electric power to a control motor for actuating the opening and closing of a door when this latter is at the end of the opening or closing range of travel.

## Ansprüche

1. Vorrichtung zur automatischen Unterbrechung der elektrischen Stromversorgung eines Motors (4), mit Massen (5), die drehfest mit dem Motor (4) verbunden und unter Einwirkung der bei dieser Drehung erzeugten Zentrifugalkraft verschiebbar sind, um die elektrische Stromversorgung des Motors einzuschalten, mit einem Rotationskörper (2), der an einem Ende der Welle (3) des Motors (4) befestigt ist und Aufnahmen (7) für die genannten Massen (5) umfaßt, einer Scheibe (12), die auf derjenigen Fläche (2a) des Körpers (2) ruht, in der die Mündungen (7b) der Aufnahmen (7) der genannten Massen (5) angebracht sind, und die diese Mündungen (7b) abdeckt, und einem Deckel (13), der die Scheibe (12) bedeckt, dadurch gekennzeichnet, daß die Scheibe (12) in bezug auf den Drehkörper (2) und auf den Deckel (13) frei ist und auf ihrer von dem Rotationskörper (2) abgewandten Seite eine zentrale Erhebung (14) aufweist, anderen Scheitel eine leitfähige Lamelle (10) eines Unterbrechers (6) elastisch anliegt, wobei die zentrale Erhebung (14) der Scheibe (12) in einer komplementären Öffnung (15) aufgenommen werden kann, die am Boden (13b) des Deckels (13) angebracht ist, und wobei die leitfähige Lamelle (10) die elektrische Stromversorgung des Motors (4) eingeschaltet hält, solange sie von dem Druck beaufschlagt wird, der von der auf die Massen (5) einwirkenden Zentrifugalkraft auf die Scheibe (12) ausgeübt wird, während die Lamelle (10) die elektrische stromversorgung des Motors unterbricht, wenn die Zentrifugalkraft absinkt und der Motor unter Einwirkung eines mechanischen Widerstandes blockiert ist.

2. Vorrichtung nach Anspruch 1, dadurch gekennzeichnet, daß die Erhebung (14) und die Öffnung (15) kegelstumpfförmig sind.

3. Vorrichtung nach Anspruch 1 oder 2, dadurch gekennzeichnet, daß der Rotationskörper (2) zylindrische Sackbohrungen (7) umfaßt, die gleichmäßig um die Achse des Körpers (2) verteilt sind, wobei diese Sackbohrungen (9) jeweils eine Metallkugel (5) aufnehmen, wobei die Gesamtheit dieser Kugeln (5) die verschiebbaren Massen bildet, wobei die Achsen der Bohrungen (7) in bezug auf die Achse des Körpers (2) so geneigt sind, daß der Boden (7a) der Bohrungen (7) sich näher an der Achse des Körpers (2) befindet als die Mündung (7b) dieser Bohrungen.

4. Vorrichtung nach einem der Ansprüche 1 bis 3, dadurch gekennzeichnet, daß der die Scheibe (12) bedeckende Deckel (13) über seinen Außenrand (13a) am Umfang des Körpers (2) befestigt ist.

5. Vorrichtung nach einem der Ansprüche 1 bis 4, dadurch gekennzeichnet, daß der Scheitel der zentralen Erhebung (14) über eine Kugel (16) mit der leitfähigen Lamelle (10) in Berührung ist.

6. Verwendung der Vorrichtung nach einem der Ansprüche 1 bis 5 zum automatischen Unterbrechen der elektrischen Stromversorgung eines Steuermotors, der das Öffnen und Schließen einer Tür bewirkt, wenn letztere sich am Ende ihres Öffnungs- oder Schließweges befindet.

Fig. 1

Fig. 2

Fig. 3

Fig. 4

Fig. 5